# EUROPEAN PATENT SPECIFICATION

(11) **EP 3 782 386 B1**
(45) Date of publication and mention of the grant of the patent: **02.08.2023**
(21) Application number: 18728803.0
(22) Date of filing: 15.05.2018
(51) Int. Cl.: H04W 4/60, H04W 8/18, H04W 4/80

(54) **MULTI-VIRTUAL SUBSCRIBER IDENTITY MODULE COMMUNICATION TERMINAL**
KOMMUNIKATIONSENDGERÄT MIT MEHREREN VIRTUELLEN TEILNEHMERIDENTITÄTSMODULEN
TERMINAL DE COMMUNICATION DE MODULE D'IDENTITÉ D'ABONNÉ MULTI-VIRTUEL

(43) Date of publication of application: 24.02.2021
(73) Proprietor: HUAWEI TECHNOLOGIES CO., LTD., Shenzhen, Guangdong 518129 (CN)
(72) Inventor: FAN, Shunan, 80992 München (DE); IVERSEN, Susan, 80992 München (DE); WU, Gengshi, 80992 München (DE); LOWE, Christopher, Kevan, 80992 München (DE)
(74) Representative: Gill Jennings & Every LLP
(86) International application number: PCT/EP2018/062589
(87) International publication number: WO 2019/219175

(56) References cited:
- WO-A1-2013/188830
- WO-A1-2014/101094
- WO-A1-2016/075622
- US-A1- 2016 007 188

## Description

### BACKGROUND

As is known to those of skill in the art, a subscriber identity module (SIM) is a smart card that is used to store the international mobile subscriber identity (IMSI) and the related authentication key used to identify and authenticate subscribers on communication terminals, such as mobile telephones. The SIM card is basically a small computer, providing a safe and controlled execution environment. Most SIM cards today are universal integrated circuit cards (UICCs). SIM cards can be removably inserted in SIM slots of a communication terminal.

Many communication terminals on the market today have multiple SIM slots to enable the communication terminal to communicate using the identity and authentication information associated with multiple SIMs. Multi-SIM communication terminals can be used for many purposes including, but not limited to, optimizing costs, separating communications for different purposes, and allowing the communication terminal to terminal calls for multiple Mobile Station International Subscriber Directory Numbers (MSISDNs). For example, if one network service provider offesrs low fees for data services and high fees for telephony services and another network service provider offers low fees for telephone services and high fees for data services, a SIM associated with the low-cost data provider can be used for data communication and a different SIM associated with the low-cost telephony provider can be used for telephony communication. In another example, multi-SIM devices may allow a user to separate personal communications and contacts from work communications and contacts. In yet, another example, multi-SIM devices may allow the user to have a SIM that is associated with a service provider in one jurisdiction and another SIM that is associated with a service provider in another jurisdiction so that the user does not have to pay roaming charges when in either of those jurisdictions.

To ensure that a multi-SIM communication terminal only establishes and maintains network communication connectivity with a network (e.g. a GSM network) via a SIM that is inserted in the communication terminal, multi-SIM communication terminals are generally configured to have the modem of the communication terminal actively poll the SIM slots on a periodic basis to detect when a SIM has been inserted or removed. For example, the modem may be configured to send a STATUS command to the SIM slots at predetermined intervals. Polling of the SIM card may also occur during some SIM Tool Kit operations (e.g. Class E operations) where the SIM can initiate interactions (so-called Pro-active commands).

There has been a recent movement to replace separate SIM cards and smart cards with integrated solutions that offer equivalent functionality. These integrated solutions (which may also be referred to as integrated UICCs (iUICCs)) execute software, which, along with the hardware of the iUICC, provides the functional equivalent of a traditional SIM card. Instead of there being a physical SIM card which is inserted into a communication terminal, or an embedded integrated circuit on the baseband of the device (i.e. an eUICC), software is stored in the memory of the communication terminal that when combined with an appropriate platform implements the functionality of a physical SIM card including the subscriber identity (e.g. IMSI) and the mechanism to authenticate them to the network. The software implementing the function of a physical SIM is typically stored in a secure area of the communication terminal, such as the Trusted Execution Environment (TEE), or even a separate hardware chip, that provides confidentiality and integrity for applications and their associated data. In some cases, a virtual SIM may be implemented as a Virtual Machine (VM).

The European Telecommunications Standards Institute (ETSI) is currently in the process of standardizing the iUICC concept as the integrated Secure Smart Platform (iSSP). The current plan is for communication terminals that support multiple virtual SIMs to work in a similar manner to current multi-SIM terminals - i.e. for the modem of the communication terminal to periodically poll the system managing the virtual SIMs to determine which virtual SIMs exist on the device and are active.

The embodiments described below are provided by way of example only and are not limiting of implementations which solve any or all of the disadvantages of known communication terminals that support multiple virtual SIMs.

US2016007188A1 describes apparatuses, methods, and computer readable storage media for implementing a trusted subscription management platform. An example server device is configured to transmit, to a trusted UI client of a mobile station, information regarding a set of virtual SIM cards associated with the mobile station, and receive, from the trusted UI client of the mobile station, a request to provision a particular virtual SIM card. The server device is further configured to initiate, by an SM-SR module and via a trusted baseband client of the mobile device, a secure proxy channel between the server device and a profile manager that hosts the particular virtual SIM card, and transmit, via the secure proxy channel and to the profile manager, an instruction regarding the particular virtual SIM card.

WO2016075622A1 describes apparatuses, methods, and systems for configuring a "SIM-less" System-on-Chip (S2oC) with integrated reprogrammable cellular network connectivity. Digitally issued Subscriber Identity Module (SIM) cards may be digitally issued by a remote server and downloaded and managed by the S2oC. A virtual SIM card container may be packaged in the S2oC and hosts an identity manager used by a plurality of applications residing in the multi-core processor of the S2oC. A virtual modem with a custom communication protocol allows the multi-core processor applications to exchange data with the virtual SIM card container.

WO2014101094A1 is directed to systems and methods for implementing a virtualized subscriber module (SIM). In general, a device equipped with virtualization resources may be configured to load at least one virtualized SIM. Wireless communication resources in the device may be configured to access the at least one virtualized SIM when, for example, initializing a connection to a wireless network. Some embodiments may include more than one virtualized SIM. For example, a plurality of virtualized SIM may be loaded at the same time (e.g., for use in initializing connections to different wireless networks). In a different embodiment, a determination to be made as to which virtualized SIM to load based on, for example, the detection of available wireless networks. It may also be possible to load a single virtual machine (VM) to emulate various hardware-based SIMs based on, for example, varying information input into the virtual machine.

### SUMMARY

This summary is provided to introduce a selection of concepts that are further described below in the detailed description. This summary is not intended to identify key features or essential features of the claimed subject matter, nor is it intended to be used to limit the scope of the claimed subject matter.

Described herein are communication terminals, and methods for operating communication terminals, capable of implementing each of a set of multiple virtual subscriber identity modules by executing software code, each virtual subscriber identity module relating to a subscriber identity and being capable of participating in a data exchange to authenticate that identity. The terminal includes a communication subsystem for communicating with a network in accordance with a subscriber identity relating to a cooperating one of the virtual subscriber identity modules; and a subscriber identity subsystem configured for interfacing between the virtual subscriber identity modules and the communication subsystem so as to enable each of the virtual subscriber identity modules to cooperate with the communication subsystem in accordance with its subscriber identity; the subscriber identity subsystem being configured to automatically signal the communication subsystem when the set of virtual subscriber identity modules capable of being implemented by the terminal changes.

Aspects of the invention are set out in the appended claims.

According to this solution the interface between the communication system and the subscriber identity system acts as a push interface. This allows the communication system, and thus the communication terminal, to operate more efficiently as it does not have to waste time and resources generating and sending polling messages to the subscriber identity system. In addition, it may also allow the communication system, and thus the communication terminal, to respond more quickly to changes in the status of a virtual SIM as the communication system will be notified of a change as it happens instead of only being notified of a change in response to a periodic poll message.

The subscriber identity subsystem may comprise an operating system for supporting the execution of the software code to implement the virtual subscriber identity modules, and the operating system is configured to automatically signal the communication subsystem when the set of virtual subscriber identity modules capable of being implemented by the terminal changes.

The terminal may comprise a memory; data defining the software code for implementing each virtual subscriber identity module of the set is stored as an image in the memory; and the subscriber identity subsystem comprises an image manager for managing the set of images stored in the memory.

The terminal may be configured to, in order to implement one of the virtual subscriber identity modules: retrieve from the memory the image for that virtual subscriber module; prepare that image for execution by forming executable code; and execute the executable code.

The step of preparing the image for execution may comprise decrypting the image to form the executable code.

The operating system may be configured to automatically signal the communication subsystem via the image manager when the set of virtual subscriber identity modules capable of being implemented by the terminal changes.

The image manager may be configured to automatically signal the communication subsystem when the set of virtual subscriber identity modules capable of being implemented by the terminal changes.

The subscriber identity subsystem may support an interface to other components of the terminal; and the subscriber identity subsystem may be configured to react to a message of a predetermined format received over that interface and specifying an identity of a component of the terminal by storing the identity of that component and, subsequently, automatically signalling that component when the set of virtual subscriber identity modules capable of being implemented by the terminal changes.

The communication subsystem may be configured to transmit a message of the predetermined format to the subscriber identity subsystem, the message specifying an identity of the communication subsystem.

The communication subsystem comprises a modem.

The communication subsystem may be configured to cooperate with a virtual subscriber module defining that identity for the establishment of that session during the performance of a communication session associated with a subscriber identity and not subsequently.

The subscriber identity subsystem may be configured to automatically signal the communication subsystem in the form of an event when the set of virtual subscriber identity modules capable of being implemented by the terminal changes.

The terminal may comprise a processor for executing the software code for implementing each virtual subscriber module.

The terminal may store, in non-transient form, data defining each virtual subscriber identity module.

Each virtual subscriber identity module may be capable of generating security keys for a communication session.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
FIG. 1 is a block diagram of a first example communication terminal capable of implementing each of a plurality of virtual subscriber identity modules by executing software code;
FIG. 2 is a timing diagram illustrating an example set of messages exchanged between components of the communication terminal of FIG. 1;
FIG. 3 is a block diagram of a second example communication terminal capable of implementing each of a plurality of virtual subscriber identity modules by executing software code; and
FIG. 4 is a flow diagram of an example method for operating a communication terminal capable of implementing each of a plurality of virtual subscriber identity modules by executing software.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art. Embodiments are described by way of example only.

As described above, the current plan is for communication terminals that support multiple virtual SIMs to work in a similar manner to current multi-SIM communication terminals - i.e. for the communication subsystem (e.g. modem) to periodically poll the subscriber identity subsystem (the subsystem that manages the virtual SIMs) to determine the status of the virtual SIMs installed and active on the communication terminal (e.g. to determine which virtual SIMs are currently installed and enabled and which have been removed or disabled). However, constantly polling the subscriber identity subsystem consumes power and processing time. Furthermore, since the communication subsystem (e.g. modem) only becomes aware of a change in the status of a virtual SIM after a poll message has been sent and a response to the poll message has been received, there may be a delay between a change in the status of a virtual SIM and the communication subsystem becoming aware of the change.

Accordingly, described herein are communication terminals capable of implementing a set of multiple virtual SIMs by executing software code, wherein the subscriber identity subsystem is configured to automatically signal the communication subsystem when the set of virtual SIMs that can be implemented or activated by the terminal has changed (e.g. when a new virtual SIM has been installed or enabled, or an existing virtual SIM has been removed or disabled). Converting the interface between the communication subsystem and the subscriber identity subsystem from a pull interface to a push interface allows the communication subsystem, and thus the communication terminal, to operate more efficiently as it does not have to waste time and resources generating and sending polling messages to the subscriber identity subsystem. In addition, it may also allow the communication subsystem, and thus the communication terminal, to respond more quickly to changes in the status of a virtual SIM as the communication subsystem will be notified of a change as it happens instead of only being notified of a change in response to a periodic poll message.

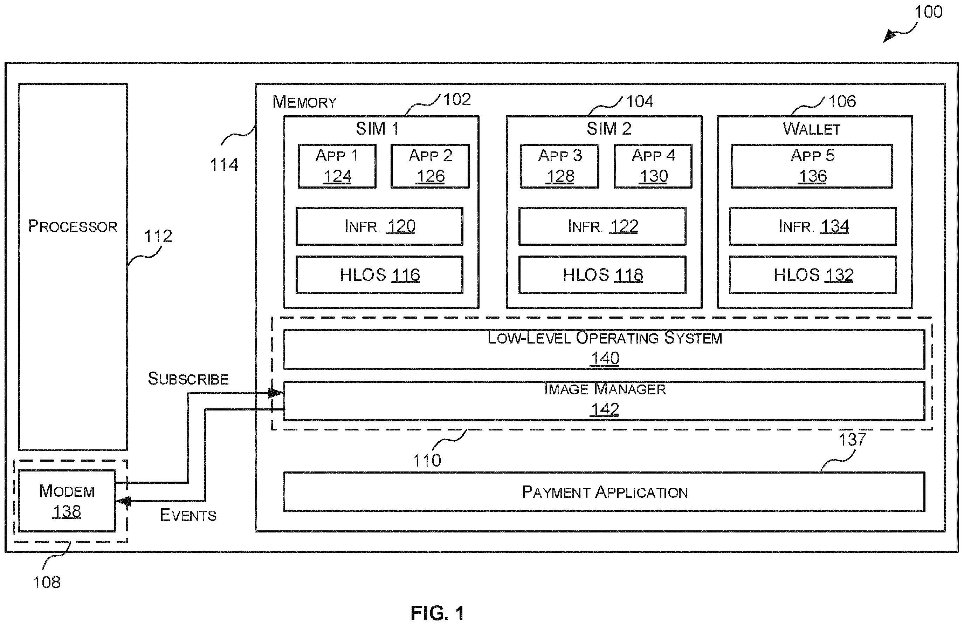

Reference is now made to FIG. 1 which illustrates a first example communication terminal 100 that is capable of implementing a set of a plurality of virtual SIMs by executing software code. The communication terminal 100 may be any computing-based device that is capable of communicating with a network (e.g. a Global System for Mobile Communications (GSM) network) using a subscriber identity (e.g. an International Mobile Subscriber Identity (IMSI) number) such as, but not limited to, a mobile telephone, a tablet, a payment terminal and the like. The communication terminal 100 comprises data defining software code for implementing a first virtual SIM 102, data defining software code for implementing a second virtual SIM 104, a communication subsystem 108 and a subscriber identity subsystem 110. It will be appreciated that FIG. 1 only shows some elements of the communication terminal 100 and there may by many other elements (e.g. a display, antenna and/or user input device) within the communication terminal that are not shown in FIG. 1.

The data defining software code for implementing a virtual SIM 102, 104 defines software code, which when executed by a processor 112 of the communication terminal, replicates the functionality of a physical SIM. Specifically, each virtual SIM is associated with, or related to, a subscriber identity (e.g. an International Mobile Subscriber Identity (IMSI) number) and is capable of participating in a data exchange to authenticate that subscriber identity. In some cases, the data defining software code for implementing a virtual SIM may define a virtual machine (VM) that replicates the functionality of a physical SIM. As is known to those of skill in the art, a VM is software that emulates or imitates dedicated hardware.

As described in draft specifications for iSSP, the data defining the software code for implementing each virtual SIM 102, 104 may be stored in memory 114 of the communication terminal 100. The memory 114 may be situated in a secure area of the communication terminal, such as the Trusted Execution Environment (TEE), or even a separate hardware chip, that provides confidentiality and integrity for applications and their associated data. In some cases, the data defining the software code for implementing a virtual SIM 102, 104 may be stored in a non-transient form.

Where the data defining software code to implement a virtual SIM defines a VM the data may be stored as a VM image. A VM image may comprise or define software code to implement a high-level operating system (HLOS) 116, 118, infrastructure 120, 122 (such as, but not limited to, Java Card / GlobalPlatform) and/or one or more applications 124, 126, 128, 130 that run on top of the high-level operating system 116, 118 and infrastructure 120, 122.

Many SIM cards comprise applications (which are often referred to as applets) that communicate with the communication terminal and/or a remote system via the communication network. For example, many SIM cards comprise one or more applications that gives the user access to the associated network (e.g. GSM network) such as, but not limited to a Network Access Application. Other examples include SIM Management functions where SIM profiles are downloaded and managed; and SIM Tool Kit applications which may include functions relating to user interaction. A VM image for implementing a virtual SIM may comprise software code to implement one of more of these applications and/or other or different applications. In some cases, the VM image may be referred to as a secondary platform bundle (SPB).

In some cases, the communication terminal may be configured to implement a virtual SIM by retrieving the VM image for that virtual SIM, forming executable code from the image, and executing the executable code on a processor 112 of the communication terminal. In some cases, the VM image may be stored in an encrypted format. In these cases, the communication terminal may be configured to decrypt the VM image prior to forming the executable code from the image.

In some cases, a virtual SIM can be in one of four states: disabled, enabled, active, or removed/deleted. A virtual SIM is said to be enabled if the data defining the software code for implementing that virtual SIM has been properly installed on, and registered with, the communication terminal and is available to be used to communicate with a network. A virtual SIM is said to be disabled if the data defining the software code for implementing that virtual SIM has been properly installed on, and registered with, the communication terminal, but it is not available to be used to communicate with a network. Once a virtual SIM is in the enabled state it can be moved to the active state.

A virtual SIM is said to be in the active state if an instantiation of the virtual SIM has been generated on the communication terminal. In other words, a virtual SIM is in the active state if the software code for implementing that virtual SIM is currently running on the communication terminal. Accordingly, the set of virtual SIMs that can be activated or implemented by the communication terminal are those virtual SIMs that are in the active state or the enabled state. A virtual SIM is said to be in the deleted state if it was installed on the communication terminal, but it has since been removed or deleted. A virtual SIM may only stay in the removed or deleted state for a short period of time (e.g. for enough time to notify other components that the virtual SIM has been deleted). In some cases, a virtual SIM can only be moved to the deleted state from the disabled state. In other words, a virtual SIM cannot move directly from the enabled or active state to the deleted state.

While the communication terminal 100 of FIG. 1 comprises two virtual SIMs, it will be evident to a person of skill in the art that the techniques and principles described herein may equally be applied to communication terminals that can support more than two virtual SIMs.

In some cases, the communication terminal 100 may also comprise data that defines software code for implementing other smart card applications. For example, in FIG. 1 the communication terminal 100 also comprises data that defines a virtual mobile wallet. A mobile wallet typically functions as a digital container for payment cards, tickets, loyalty cards etc. and may form part of a solution that allows a user to make payments using Near Field Communication (NFC) via a payment application 137. It will be evident to a person of skill in the art that this is an example only and that the methods and techniques described herein may be applied to communication terminals that support other UICC and smart card applications. Like a virtual SIM, the virtual mobile wallet may be implemented by a VM and thus the data defining the software code to implement the virtual mobile wallet may comprise a VM image that comprises/defines a high-level operating system 132, infrastructure 134 and one or more applications 136 that run on the high-level operating system 132 and infrastructure 134.

The communication subsystem 108 is capable of communicating with a network (e.g. a Global System for Mobile Communications (GSM) network) in accordance with a subscriber identity (e.g. IMSI) relating to a virtual SIM enabled on the communication terminal 100. In some cases, the communication subsystem 108 may comprise a modem 138. As is known to a person of skill in the art, a modem is a network device that both modulates and demodulates analog carrier signals for encoding and decoding digital information for processing. However, it will be evident to a person of skill in the art that this is an example only and that the communication subsystem 100 may comprise additional and/or different components to enable communication using a subscriber identity (e.g. IMSI).

The subscriber identity subsystem 110 acts as an interface between the virtual SIMs and the communication subsystem 108 so as to enable each of the virtual SIMs to cooperate with the communication subsystem 108 in accordance with its subscriber identity (e.g. IMSI). The subscriber identity subsystem 110 is configured to manage the virtual SIMs and the data related thereto and to automatically signal or notify the communication subsystem 108 when there has been a change to the virtual SIMs that can be implemented or activated by the communication terminal. For example, the subscriber identity subsystem 110 may be configured to send a message to, or otherwise signal to, the communication subsystem 108 when it has detected that a virtual SIM has been installed and enabled on the communication terminal, when it has detected that a virtual SIM has been removed, and/or when it has detected that a virtual SIM has been disabled.

In some examples, the subscriber identity subsystem 110 may comprise an operating system (OS) 140 for supporting the execution of the software code for implementing the virtual SIMs. For example, the software code implementing the virtual SIMs may be run on top of the OS 140 of the subscriber identity subsystem 110. The OS 140 of the subscriber identity subsystem 110 may be a low-level OS. As is known to those of skill in the art, a low-level OS, compared to a high-level OS operates at a lower level of abstraction with respect to the components of the system. The OS 140 of the subscriber identity subsystem 110 may be configured to automatically signal the communication subsystem 108 when the OS 140 has detected a change to the set of virtual SIMs that can be activated or implemented by the communication terminal changes. In some cases, the OS 140 may be able to directly signal the communication subsystem 108 (e.g. modem) when the OS has detected a change to the set of virtual SIMs that can be activated or implemented by the communication terminal changes. For example, in some cases the OS 140 of the subscriber identity subsystem 110 may be able to detect events related to the status of the virtual SIMs. In these cases, the communication subsystem 108 (e.g. modem) may be able to subscribe to the OS 140 for those events which causes the OS 140 to automatically send event messages to the communication subsystem 108 (e.g. modem) when it detects one of the subscribed events.

However, in other cases, the OS 140 may be able to signal the communication subsystem of changes to the set of virtual SIMs that can be activated or implemented by the communication terminal via another component such as, but not limited to, an image manager.

For example, as shown in FIG. 1, where the software code for implementing a virtual SIM implements a VM and the data defining the software code for implementing the virtual SIM is stored as a VM image, the subscriber identity subsystem 110 may also comprise an image manager 142 that is configured to manage the VM images stored in the memory 114 of the communication terminal 100. In some cases, the image manager 142 may be implemented as a hypervisor (which also may be referred to as a virtual machine monitor (VMM)). As is known to those of skill in the art, a hypervisor is software that creates and runs VMs. The computer on which a hypervisor runs a VM is the host machine and the VM is referred to as the guest machine. The hypervisor presents the guest operating system (e.g. HLOS 116, 118, 132) with a virtual operating platform.

Hypervisors are generally configured to detect, and log certain events related to the VMs that they manage. Events that may be detected and logged may include when a new VM has been installed, when an existing VM has been removed, when an existing VM has been enabled (meaning it is ready to be activated or run), and/or when an existing VM has been disabled (meaning it is not ready to be activated or run). In some cases, the hypervisor may be configured to detect such VM events when it has been signalled by the low-level OS 140 that there has been a change in the set of virtual SIMs that can be activated or implemented by the communication terminal. In other cases, the hypervisor may be configured to detect such VM events in another manner. Where the hypervisor is configured to detect and log such events the communication subsystem 108 may be configured to cause the hypervisor to automatically notify it of any changes to the VMs installed on the communication terminal by subscribing to events related to the status of the VMs that implement virtual SIMs. Specifically, once the communication subsystem has subscribed to such events the hypervisor automatically notifies the communication subsystem 108 of such events in the form of an event notification or message. In this manner the interface between the communication subsystem 108 and the subscriber identity subsystem 110 is said to be event-driven.

In some cases, the subscriber identity subsystem supports an interface to other components of the terminal. The subscriber identity subsystem may be configured to react to a message of a predetermined format received over that interface and specifying an identity of a component of the terminal by storing the identity of that component and, subsequently, automatically signalling that component when the set of virtual subscriber identity modules capable of being implemented by the terminal changes. The communication subsystem may be configured to transmit a message of the predetermined format to the subscriber identity subsystem, wherein the message specifies an identity of the communication subsystem.

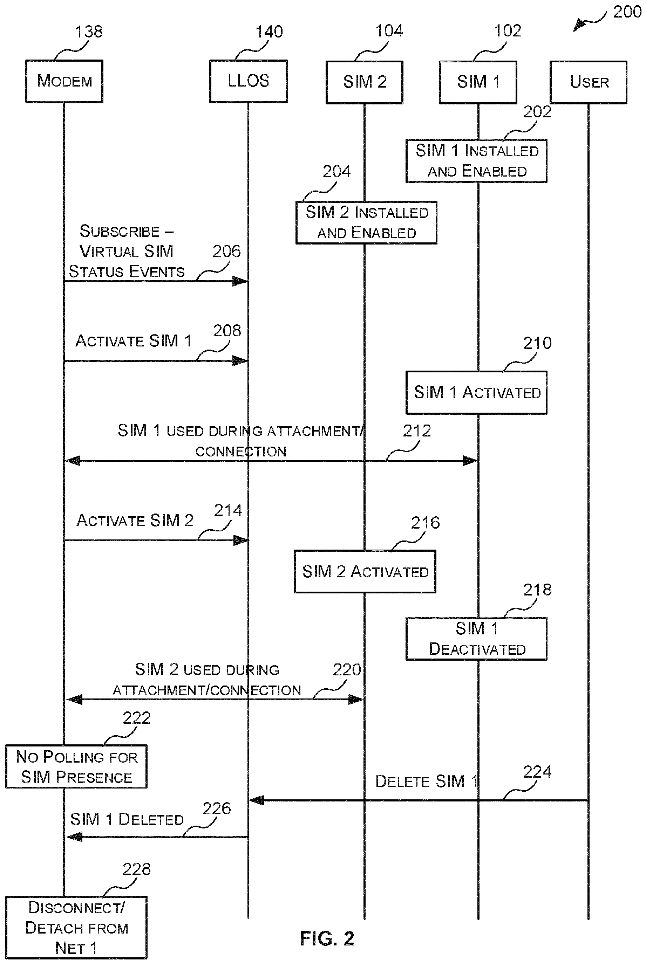

Reference is now made to FIG. 2 which illustrates an example timing diagram 200 which illustrates example messages that may be communicated between the components of the communication terminal 100 of FIG. 1. In this example, at 202 the first virtual SIM ("SIM 1") is installed and activated on the communication terminal 100. Installing the first virtual SIM may comprise securely transferring the data defining the software (e.g. a Profile Package) to implement the first virtual SIM 102 (e.g. a VM image for the first virtual SIM) to memory in a secure area of the communication terminal and if required verifying, decrypting and registering the data with the subscriber identity subsystem 110. At 204 the second virtual SIM ("SIM 2") is installed and activated on the communication terminal 100. At 206 the modem 138 subscribes to the low-level operating system 140 for status events related to the virtual SIMs. At 208 the modem 138 sends a request to the low-level operating system 140 to activate the first virtual SIM ("SIM 1"). In response, at 210 the first virtual SIM ("SIM 1") is activated. As described above, activating a virtual SIM may comprise creating an instantiation of the virtual SIM by executing the software code that defines the virtual SIM on a processor of the communication terminal. At 212 the activated virtual SIM ("SIM 1") is used by the modem 138 to attach or connect to the network associated with the virtual SIM so that the communication terminal can communicate over that network using the subscriber identity associated with that virtual SIM.

At 214 the modem 138 sends a request to the low-level operating system 140 to activate the second virtual SIM ("SIM 2"). This causes the low-level operating system 140 to activate the second virtual SIM ("SIM 2") at 216. It some cases this may also cause the low-level operating system 140 to deactivate the second virtual SIM ("SIM 1") at 218. As described above, activating a virtual SIM may comprise creating an instantiation of the virtual SIM by executing the software code that defines the virtual SIM on a processor of the communication terminal. Deactivating a virtual SIM may comprise deleting the instantiation of the virtual SIM by ceasing to run the software code that defines the virtual SIM. At 220 the activated SIM ("SIM 2") is used by the modem 138 to attach or connect to the network associated with the virtual SIM so that the communication terminal can communication over that network using the subscriber identity associated with that virtual SIM.

Now that the communication terminal has established connections with the networks associated with the first and second virtual SIMs ("SIM 1" and "SIM 2") the modem 138 wants to ensure that the connections are only maintained while the virtual SIM cards related thereto are enabled in the communication terminal. However, since the modem 138 has subscribed to the low-level operating system 140 for virtual SIM status events the modem 138 does not have to actively poll the low-level operating system 140 at 222, instead the modem 138 can wait for event notifications from the low-level operating system 140. For example, when the deletion or removal of the first virtual SIM ("SIM 1") is initiated at 224 by for example, a user, owner or mobile network operator, the low-level operating system 140 automatically sends an event notification to the modem 138 at 226 notifying the modem 138 that the virtual SIM has been deleted. In response to receiving the event notification, the modem 138 may detach from the network associated with the first virtual SIM ("SIM 1") at 228.

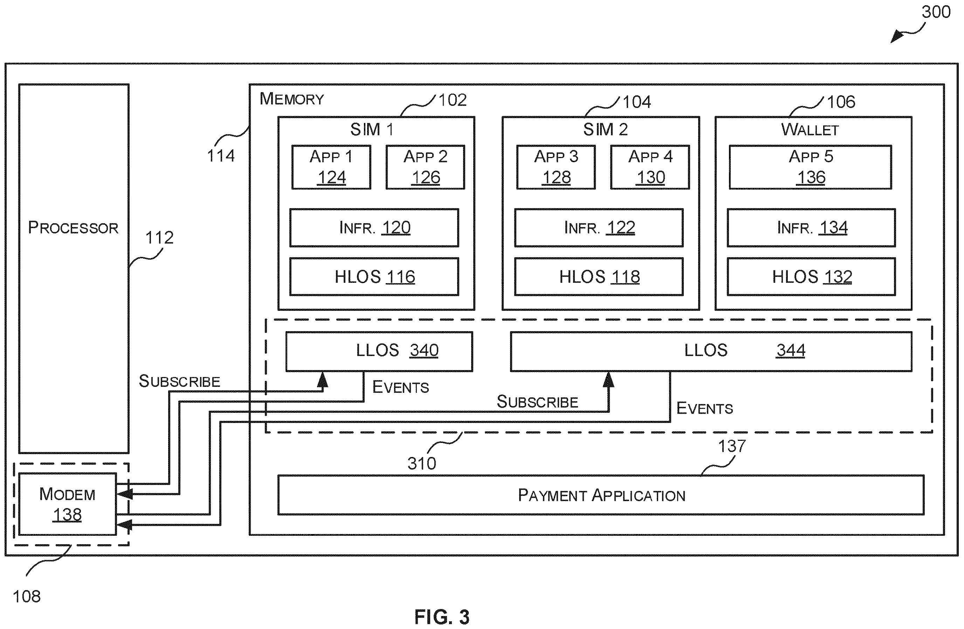

Reference is now made to FIG. 3 which illustrates a second example communication terminal 300 that is capable of implementing each of a set of multiple virtual SIMs by executing software. The communication terminal 300 of FIG. 3, like the communication terminal 100 of FIG. 1, comprises data defining software code for implementing a first virtual SIM 102, data defining software code for implementing a second virtual SIM 104, data defining software code for implementing a virtual mobile wallet 106, a communication subsystem 108 and a subscriber identity subsystem 310. The data for the first and second virtual SIMs 102, 104, the data for the virtual mobile wallet 106, and the communication subsystem 108 operate in the same manner as described with respect to FIG. 1. However, instead of the subscriber identity subsystem 310 comprising a single low-level operating system over which instantiations of the first and second virtual SIMs are established, the subscriber identity subsystem 310 of FIG. 3 comprises multiple operating systems wherein each of the virtual SIMS are instantiated over separate low-level operating systems. For example, in FIG. 3 the subscriber identity subsystem 310 comprises a first low-level operating system (LLOS) 340 over which the instantiation of the first virtual SIM is established, and a second low-level operating system (LLOS) 344 over which the instantiations of the second virtual SIM and the virtual mobile wallet are established.

In this configuration each low-level operating system 340, 344 may be configured to signal to the communication subsystem 108 (e.g. the modem 138) when there has been a change in the virtual SIMs associated with that low-level operating system. For example, the communication subsystem (e.g. the modem) may be configured to subscribe to both of the low-level operating systems 340, 344 for virtual SIM status events. The communication subsystem 108 may then receive event notifications from both low-level operating systems 340, 344. Such a configuration may be suitable in cases where a single low-level operating system cannot be used to support multiple virtual SIMs.

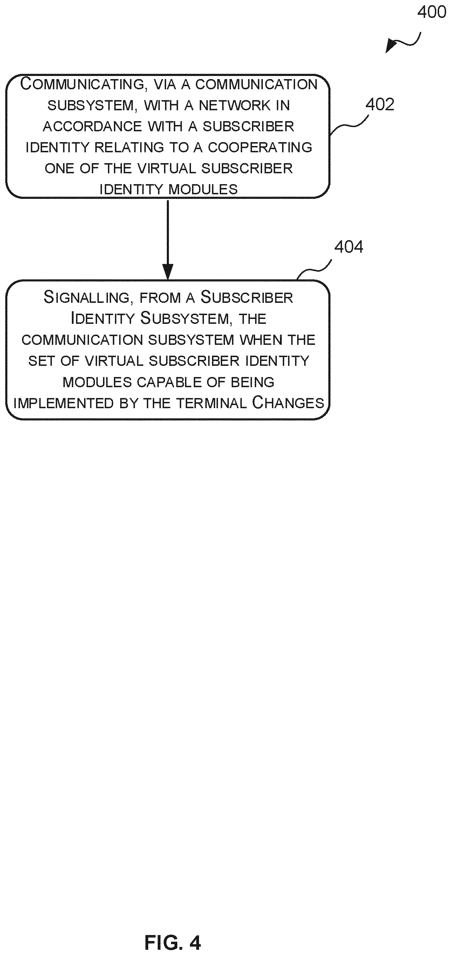

Reference is now made to FIG. 4 which illustrates an example method 400 of operating a communication terminal (e.g. communication terminal 100 of FIG. 1 or communication terminal 300 of FIG. 3) that is capable of implementing multiple virtual SIMs by executing software. The method 400 begins at block 402 where, in a communication subsystem of the terminal (e.g. communication subsystem 108), the terminal communicates with a network (e.g. GSM network) in accordance with a subscriber identity (e.g. IMSI) relating to a cooperating one of the virtual SIMs. The method then proceeds to block 404 where, in a subscriber identity subsystem of the terminal (e.g. subscriber identity subsystem 110 of FIG. 1 or subscriber identity subsystem 310 of FIG. 3) configured for interfacing between the virtual SIMs and the communication subsystem so as to enable each of the virtual SIMs to cooperate with the communication subsystem in accordance with its subscriber identity, automatically signals the communication subsystem when the set of virtual subscriber identity modules capable of being implemented by the terminal changes. As described above, in some cases each virtual SIM may be in one of four states - disabled, enabled, active and removed. In these cases, the subscriber identity subsystem may be configured to determine that the set of virtual subscriber identity modules capable of being implemented by the terminal changes if the state of a virtual SIM changes to the disabled or removed state, or if the state of a virtual SIM changes to the active state, or if new virtual SIM is installed.

The method 400 of FIG. 4 may be implemented by the communication terminal 100 of FIG. 1 or the communication terminal 300 of FIG. 3.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention as limited by the appended claims.

## Claims

1. A communication terminal (300) capable of implementing each of a set of multiple virtual subscriber identity modules (102, 104) by executing software code, each virtual subscriber identity module relating to a subscriber identity and being capable of participating in a data exchange to authenticate that identity, the terminal (300) comprising:
a communication subsystem (108) for communicating with a network in accordance with a subscriber identity relating to one of the virtual subscriber identity modules (102, 104); and
a subscriber identity subsystem (110) configured for interfacing between the virtual subscriber identity modules (102, 104) and the communication subsystem (108) so as to enable each of the virtual subscriber identity modules (102, 104) to cooperate with the communication subsystem (108) in accordance with its subscriber identity; the subscriber identity subsystem (110) being configured to automatically signal the communication subsystem (108) when the set of virtual subscriber identity modules (102, 104) capable of being implemented by the terminal changes,
wherein the communication subsystem (108) comprises a modem (138) and is configured to establish connections with a plurality of networks each associated with a respective one of the virtual subscriber identity modules (102, 104) and is configured to subscribe to event notifications from a low-level operating system (140) of the subscriber identity subsystem (110), such that the communication subsystem (108) ensures that the connections are only maintained while the virtual subscriber identity modules (102, 104) are enabled in the communication terminal (300).

2. The communication terminal (300) as claimed in claim 1, wherein the subscriber identity subsystem (110) comprises an operating system for supporting the execution of the software code to implement the virtual subscriber identity modules (102, 104), and the operating system is configured to automatically signal the communication subsystem (108) when the set of virtual subscriber identity modules (102, 104) capable of being implemented by the terminal changes.

3. The communication terminal (300) as claimed in claim 1 or 2, wherein:
the terminal (300) comprises a memory;
data defining the software code for implementing each virtual subscriber identity module of the set is stored as an image in the memory; and
the subscriber identity subsystem (110) comprises an image manager for managing the set of images stored in the memory.

4. The communication terminal (300) as claimed in claim 3, wherein the terminal (300) is configured to, in order to implement one of the virtual subscriber identity modules (102, 104):
retrieve from the memory the image for that virtual subscriber module;
prepare that image for execution by forming executable code; and
execute the executable code.

5. The communication terminal (300) as claimed in claim 4, wherein the step of preparing the image for execution comprises decrypting the image to form the executable code.

6. The communication terminal (300) as claimed in any of claims 3 to 5 as dependent on claim 2, wherein the operating system is configured to automatically signal the communication subsystem (108) via the image manager when the set of virtual subscriber identity modules (102, 104) capable of being implemented by the terminal changes.

7. The communication terminal (300) as claimed in any of claims 3 to 6, wherein the image manager is configured to automatically signal the communication subsystem (108) when the set of virtual subscriber identity modules (102, 104) capable of being implemented by the terminal changes.

8. The communication terminal (300) as claimed in any of claims 1 to 7, wherein:
the subscriber identity subsystem (110) supports an interface to other components of the terminal (300); and
the subscriber identity subsystem (110) is configured to react to a message of a predetermined format received over that interface, the message specifying an identity of a component of the terminal (300), the subscriber identity subsystem (110) configured to react the message by storing the identity of that component and, subsequently, automatically signalling to that component when the set of virtual subscriber identity modules (102, 104) capable of being implemented by the terminal changes.

9. The communication terminal (300) as claimed in claim 8, wherein the communication subsystem (108) is configured to transmit a message of the predetermined format to the subscriber identity subsystem (110), the message specifying an identity of the communication subsystem (108).

10. The communication terminal (300) as claimed in any of claims 1 to 9, wherein the communication subsystem (108) is configured to cooperate with a virtual subscriber module defining that identity for the establishment of that session during the performance of a communication session associated with a subscriber identity and not subsequently.

11. The communication terminal (300) as claimed in any of claims 1 to 10, wherein the subscriber identity subsystem (110) is configured to automatically signal the communication subsystem (108) in the form of an event when the set of virtual subscriber identity modules (102, 104) capable of being implemented by the terminal changes.

12. A communication terminal (300) as claimed in any of claims 1 to 11, wherein each virtual subscriber identity module is capable of generating security keys for a communication session.

13. A method for operating a communication terminal capable of implementing each of a set of multiple virtual subscriber identity modules by executing software code, each virtual subscriber identity module relating to a subscriber identity and being capable of participating in a data exchange to authenticate that identity, the method comprising:
in a communication subsystem of the terminal, communicating with a network in accordance with a subscriber identity relating to one of the virtual subscriber identity modules; and
in a subscriber identity subsystem of the terminal configured for interfacing between the virtual subscriber identity modules and the communication subsystem so as to enable each of the virtual subscriber identity modules to cooperate with the communication subsystem in accordance with its subscriber identity automatically signalling the communication subsystem when the set of virtual subscriber identity modules capable of being implemented by the terminal changes, the method further comprises, in the communication subsystem of the terminal:
establishing connections with a plurality of networks each associated with a respective one of the virtual subscriber identity modules; and,
subscribing to event notifications from a low-level operating system of the subscriber identity subsystem, such that the communication subsystem ensures that the connections are only maintained while the virtual subscriber identity modules are enabled in the communication terminal.

14. A computer readable storage medium having stored thereon computer readable instructions that, when executed at a communication terminal (300) cause the communication terminal (300) to perform the method of claim 13.

## Patentansprüche

1. Kommunikationsendgerät (300), das imstande ist, jedes eines Satzes von mehreren virtuellen Teilnehmeridentitätsmodulen (102, 104) durch Ausführen von Softwarecode zu implementieren, wobei jedes virtuelle Teilnehmeridentitätsmodul zu einer Teilnehmeridentität in Beziehung steht und imstande ist, an einem Datenaustausch zum Authentifizieren dieser Identität teilzunehmen, das Endgerät (300) umfassend:
ein Kommunikationsuntersystem (108) zum Kommunizieren mit einem Netzwerk gemäß einer Teilnehmeridentität, die mit einem der virtuellen Teilnehmeridentitätsmodule (102, 104) in Beziehung steht; und
ein Teilnehmeridentitätsuntersystem (110), konfiguriert zum Koppeln zwischen den virtuellen Teilnehmeridentitätsmodulen (102, 104) und dem Kommunikationsuntersystem (108), um jedes der virtuellen Teilnehmeridentitätsmodule (102, 104) in die Lage zu versetzen, mit dem Kommunikationsuntersystem (108) gemäß seiner Teilnehmeridentität zu kooperieren; wobei das Teilnehmeridentitätsuntersystem (110) konfiguriert ist, dem Kommunikationsuntersystem (108) automatisch zu signalisieren, wenn sich der Satz von virtuellen Teilnehmeridentitätsmodulen (102, 104), die imstande sind, durch das Endgerät implementiert zu werden, ändert,
wobei das Kommunikationsuntersystem (108) ein Modem (138) umfasst und konfiguriert ist zum Herstellen von Verbindungen mit einer Vielzahl von Netzwerken, die jedes mit einem jeweiligen einen der virtuellen Teilnehmeridentitätsmodule (102, 104) assoziiert sind, und konfiguriert ist zum Abonnieren von Ereignisbenachrichtigungen von einem Betriebssystem der unteren Ebene (140) des Teilnehmeridentitätsuntersystems (110) derart, dass das Kommunikationsuntersystem (108) gewährleistet, dass die Verbindungen nur aufrechterhalten werden, während die virtuellen Teilnehmeridentitätsmodule (102, 104) in dem Kommunikationsendgerät (300) aktiviert sind.

2. Kommunikationsendgerät (300) nach Anspruch 1, wobei das Teilnehmeridentitätsuntersystem (110) ein Betriebssystem zum Unterstützen der Ausführung des Softwarecodes zum Implementieren der virtuellen Teilnehmeridentitätsmodule (102, 104) umfasst und das Betriebssystem konfiguriert ist, dem Kommunikationsuntersystem (108) automatisch zu signalisieren, wenn sich der Satz von virtuellen Teilnehmeridentitätsmodulen (102, 104), die imstande sind, durch das Endgerät implementiert zu werden, ändert.

3. Kommunikationsendgerät (300) nach Anspruch 1 oder 2, wobei:
das Endgerät (300) einen Speicher umfasst;
Daten, die den Softwarecode zum Implementieren jedes virtuellen Teilnehmeridentitätsmoduls des Satzes definieren, als ein Bild in dem Speicher gespeichert sind; und
das Teilnehmeridentitätsuntersystem (110) eine Bildverwaltungsvorrichtung zum Verwalten des in dem Speicher gespeicherten Satzes von Bildern umfasst.

4. Kommunikationsendgerät (300) nach Anspruch 3, wobei das Endgerät (300), um eines der virtuellen Teilnehmeridentitätsmodule (102, 104) zu implementieren, konfiguriert ist zum:
Abrufen des Bilds für dieses virtuelle Teilnehmermodul aus dem Speicher;
Vorbereiten dieses Bilds zur Ausführung durch Bilden von ausführbarem Code; und
Ausführen des ausführbaren Codes.

5. Kommunikationsendgerät (300) nach Anspruch 4, wobei der Schritt des Vorbereitens des Bilds zur Ausführung umfasst, das Bild zu entschlüsseln, um den ausführbaren Code zu bilden.

6. Kommunikationsendgerät (300) nach einem der Ansprüche 3 bis 5 in Abhängigkeit von Anspruch 2, wobei das Betriebssystem konfiguriert ist, dem Kommunikationsuntersystem (108) über die Bildverwaltungsvorrichtung automatisch zu signalisieren, wenn sich der Satz von virtuellen Teilnehmeridentitätsmodulen (102, 104), die imstande sind, durch das Endgerät implementiert zu werden, ändert.

7. Kommunikationsendgerät (300) nach einem der Ansprüche 3 bis 6, wobei die Bildverwaltungsvorrichtung konfiguriert ist, dem Kommunikationsuntersystem (108) automatisch zu signalisieren, wenn sich der Satz von virtuellen Teilnehmeridentitätsmodulen (102, 104), die imstande sind, durch das Endgerät implementiert zu werden, ändert.

8. Kommunikationsendgerät (300) nach einem der Ansprüche 1 bis 7, wobei:
das Teilnehmeridentitätsuntersystem (110) eine Schnittstelle zu anderen Komponenten des Endgeräts (300) unterstützt; und
das Teilnehmeridentitätsuntersystem (110) konfiguriert ist, auf eine Nachricht in einem im Voraus bestimmten Format, die über die Schnittstelle empfangen wurde, zu reagieren, wobei die Nachricht eine Identität einer Komponente des Endgeräts (300) spezifiziert, das Teilnehmeridentitätsuntersystem (110) konfiguriert ist, auf die Nachricht durch Speichern der Identität dieser Komponente zu reagieren und anschließend dieser Komponente automatisch zu signalisieren, wenn sich der Satz von virtuellen Teilnehmeridentitätsmodulen (102, 104), die imstande sind, durch das Endgerät implementiert zu werden, ändert.

9. Kommunikationsendgerät (300) nach Anspruch 8, wobei das Kommunikationsuntersystem (108) konfiguriert ist, eine Nachricht in dem im Voraus bestimmten Format an das Teilnehmeridentitätsuntersystem (110) zu übertragen, wobei die Nachricht eine Identität des Kommunikationsuntersystems (108) spezifiziert.

10. Kommunikationsendgerät (300) nach einem der Ansprüche 1 bis 9, wobei das Kommunikationsuntersystem (108) konfiguriert ist, mit einem virtuellen Teilnehmermodul, das diese Identität definiert, für die Einrichtung dieser Sitzung während der Durchführung einer mit einer Teilnehmeridentität assoziierten Kommunikationssitzung und nicht anschließend zu kooperieren.

11. Kommunikationsendgerät (300) nach einem der Ansprüche 1 bis 10, wobei das Teilnehmeridentitätsuntersystem (110) konfiguriert ist, dem Kommunikationsuntersystem (108) in der Form eines Ereignisses automatisch zu signalisieren, wenn sich der Satz von virtuellen Teilnehmeridentitätsmodulen (102, 104), die imstande sind, durch das Endgerät implementiert zu werden, ändert.

12. Kommunikationsendgerät (300) nach einem der Ansprüche 1 bis 11, wobei jedes virtuelle Teilnehmeridentitätsmodul imstande ist, Sicherheitsschlüssel für eine Kommunikationssitzung zu erzeugen.

13. Verfahren zum Betreiben eines Kommunikationsendgeräts, das imstande ist, jedes eines Satzes von mehreren virtuellen Teilnehmeridentitätsmodulen durch Ausführen von Softwarecode zu implementieren, wobei jedes virtuelle Teilnehmeridentitätsmodul zu einer Teilnehmeridentität in Beziehung steht und imstande ist, an einem Datenaustausch zum Authentifizieren dieser Identität teilzunehmen, das Verfahren umfassend:
in einem Kommunikationsuntersystem des Endgeräts Kommunizieren mit einem Netzwerk gemäß einer Teilnehmeridentität, die mit einem der virtuellen Teilnehmeridentitätsmodulen in Beziehung steht; und
in einem Teilnehmeridentitätsuntersystem des Endgeräts, das konfiguriert ist zum Koppeln zwischen den virtuellen Teilnehmeridentitätsmodulen und dem Kommunikationsuntersystem, um jedes der virtuellen Teilnehmeridentitätsmodule in die Lage zu versetzen, mit dem Kommunikationsuntersystem gemäß seiner Teilnehmeridentität zu kooperieren, automatisches Signalisieren dem Kommunikationsuntersystem, wenn sich der Satz von virtuellen Teilnehmeridentitätsmodulen, die imstande sind, durch das Endgerät implementiert zu werden, ändert,
wobei das Verfahren in dem Kommunikationsuntersystem des Endgeräts ferner umfasst:
Herstellen von Verbindungen mit einer Vielzahl von Netzwerken, die jedes mit einem jeweiligen einen der virtuellen Teilnehmeridentitätsmodule assoziiert sind; und
Abonnieren von Ereignisbenachrichtigungen von einem Betriebssystem der unteren Ebene des Teilnehmeridentitätsuntersystems derart, dass das Kommunikationsuntersystem gewährleistet, dass die Verbindungen nur aufrechterhalten werden, während die virtuellen Teilnehmeridentitätsmodule in dem Kommunikationsendgerät aktiviert sind.

14. Computerlesbares Speichermedium mit darauf gespeicherten computerlesbaren Anweisungen, die, wenn sie in einem Kommunikationsendgerät (300) ausgeführt werden, das Kommunikationsendgerät (300) veranlassen, das Verfahren nach Anspruch 13 durchzuführen.

## Revendications

1. Terminal de communication (300) capable de mettre en oeuvre chacun d'un ensemble de multiples modules d'identités d'abonnés virtuels (102, 104) en exécutant un code logiciel, chaque module d'identité d'abonné virtuel se rapportant à une identité d'abonné et étant capable de participer à un échange de données pour authentifier cette identité, le terminal (300) comprenant :
un sous-système de communication (108) pour communiquer avec un réseau conformément à une identité d'abonné relative à un des modules d'identités d'abonnés virtuels (102, 104) ; et
un sous-système d'identité d'abonné (110) configuré pour s'interfacer entre les modules d'identités d'abonnés virtuels (102, 104) et le sous-système de communication (108) de manière à permettre à chacun des modules d'identités d'abonnés virtuels (102, 104) de coopérer avec le sous-système de communication (108) conformément à son identité d'abonné ; le sous-système d'identité d'abonné (110) étant configuré pour signaler automatiquement au sous-système de communication (108) quand change l'ensemble de modules d'identités d'abonnés virtuels (102, 104) pouvant être implémenté par le terminal,
dans lequel le sous-système de communication (108) comprend un modem (138) et est configuré pour établir des connexions avec une pluralité de réseaux associés chacun à un des modules d'identités d'abonnés virtuels (102, 104) et est configuré pour s'abonner à des notifications d'événements émises par un système d'exploitation de bas niveau (140) du sous-système d'identité d'abonné (110), de telle sorte que le sous-système de communication (108) garantisse que les connexions ne sont maintenues que durant l'activation des modules d'identités d'abonnés virtuels (102, 104) dans le terminal de communication (300).

2. Terminal de communication (300) selon la revendication 1, dans lequel le sous-système d'identité d'abonné (110) comprend un système d'exploitation pour prendre en charge l'exécution du code logiciel afin d'implémenter les modules d'identités d'abonnés virtuels (102, 104), et le système d'exploitation est configuré pour signaler automatiquement au sous-système de communication (108) quand change l'ensemble de modules d'identités d'abonnés virtuels (102, 104) pouvant être implémenté par le terminal.

3. Terminal de communication (300) selon la revendication 1 ou 2, dans lequel :
le terminal (300) comprend une mémoire ;
les données définissant le code logiciel pour la mise en oeuvre de chaque module d'identité d'abonné virtuel de l'ensemble sont stockées sous forme d'image dans la mémoire ; et
le sous-système d'identité d'abonné (110) comprend un gestionnaire d'images pour gérer l'ensemble d'images stocké dans la mémoire.

4. Terminal de communication (300) selon la revendication 3, le terminal (300) étant configuré pour, afin de mettre en oeuvre l'un des modules d'identités d'abonnés virtuels (102, 104) :
extraire de la mémoire l'image de ce module d'abonné virtuel ;
préparer cette image en vue de son exécution en formant un code exécutable ; et
exécuter le code exécutable.

5. Terminal de communication (300) selon la revendication 4, dans lequel l'étape de préparation de l'image en vue de son exécution comprend le décryptage de l'image pour former le code exécutable.

6. Terminal de communication (300) selon l'une quelconque des revendications 3 à 5 dépendant de la revendication 2, dans lequel le système d'exploitation est configuré pour signaler automatiquement au sous-système de communication (108) par l'intermédiaire du gestionnaire d'images quand change l'ensemble de modules d'identités d'abonnés virtuels (102, 104) pouvant être implémenté par le terminal.

7. Terminal de communication (300) selon l'une quelconque des revendications 3 à 6, dans lequel le gestionnaire d'images est configuré pour signaler automatiquement au sous-système de communication (108) quand change l'ensemble de modules d'identités d'abonnés virtuels (102, 104) pouvant être implémenté par le terminal.

8. Terminal de communication (300) selon l'une quelconque des revendications 1 à 7, dans lequel :
le sous-système d'identité d'abonné (110) prend en charge une interface avec d'autres composants du terminal (300) ; et
le sous-système d'identité d'abonné (110) est configuré pour réagir à un message d'un format prédéterminé reçu sur cette interface, le message spécifiant une identité d'un composant du terminal (300), le sous-système d'identité d'abonné (110) étant configuré pour réagir au message en stockant l'identité de ce composant et, par la suite, en signalant automatiquement à ce composant quand change l'ensemble de modules d'identités d'abonnés virtuels (102, 104) pouvant être implémenté par le terminal.

9. Terminal de communication (300) selon la revendication 8, dans lequel le sous-système de communication (108) est configuré pour transmettre un message au format prédéterminé au sous-système d'identité d'abonné (110), le message spécifiant une identité du sous-système de communication (108).

10. Terminal de communication (300) selon l'une quelconque des revendications 1 à 9, dans lequel le sous-système de communication (108) est configuré pour coopérer avec un module d'abonné virtuel définissant cette identité pour l'établissement de cette session pendant l'exécution d'une session de communication associée à une identité d'abonné et non après celle-ci.

11. Terminal de communication (300) selon l'une quelconque des revendications 1 à 10, dans lequel le sous-système d'identité d'abonné (110) est configuré pour signaler automatiquement au sous-système de communication (108) sous la forme d'un événement quand change l'ensemble de modules d'identités d'abonnés virtuels (102, 104) pouvant être implémenté par le terminal.

12. Terminal de communication (300) selon l'une quelconque des revendications 1 à 11, dans lequel chaque module d'identité d'abonné virtuel est capable de générer des clés de sécurité pour une session de communication.

13. Procédé d'exploitation d'un terminal de communication capable de mettre en oeuvre chacun d'un ensemble de multiples modules d'identités d'abonnés virtuels en exécutant un code logiciel, chaque module d'identité d'abonné virtuel se rapportant à une identité d'abonné et étant capable de participer à un échange de données pour authentifier cette identité, le procédé comprenant :
dans un sous-système de communication du terminal, la communication avec un réseau conformément à une identité d'abonné relative à l'un des modules d'identités d'abonnés virtuels ; et
dans un sous-système d'identité d'abonné du terminal configuré pour s'interfacer entre les modules d'identités d'abonnés virtuels et le sous-système de communication de manière à permettre à chacun des modules d'identités d'abonnés virtuels de coopérer avec le sous-système de communication conformément à son identité d'abonné la signalisation automatique au sous-système de communication quand change l'ensemble de modules d'identités d'abonnés virtuels pouvant être implémenté par le terminal,
le procédé comprend en outre, dans le sous-système de communication du terminal :
l'établissement de connexions avec une pluralité de réseaux associés chacun à un des modules d'identités d'abonnés virtuels respectifs ; et
l'abonnement à des notifications d'événements d'un système d'exploitation de bas niveau du sous-système d'identité d'abonné, de telle sorte que le sous-système de communication garantisse que les connexions ne sont maintenues que lorsque les modules d'identités d'abonnés virtuels sont activés dans le terminal de communication.

14. Support de stockage lisible par ordinateur sur lequel sont stockées des instructions lisibles par ordinateur qui, à leur exécution sur un terminal de communication (300), amènent le terminal de communication (300) à réaliser le procédé selon la revendication 13.
